# FASCICULE DE BREVET EUROPEEN

(11) **EP 0 801 929 B1**
(45) Date de publication et mention de la délivrance du brevet: **10.07.2002**
(21) Numéro de dépôt: 97470003.1
(22) Date de dépôt: 07.02.1997
(51) Int. Cl.: A61C 3/02, B25G 3/34

(54) **Manche pour instrument dentaire rotatif**
Hülse für rotierendes dentales Instrument
Sleeve for rotary dental instrument

(30) Priorité: 17.04.1996 FR 9604988
(43) Date de publication de la demande: 22.10.1997
(73) Titulaire: MICRO MEGA INTERNATIONAL MANUFACTURES (Société Anonyme), 25000 Besançon (FR)
(72) Inventeur: Badoz, Jean-Marie, 25870 Doubs (FR)
(74) Mandataire: Poupon, Michel

(56) Documents cités:
- FR-A- 2 499 446

## Description

La présente invention concerne les manches pour instruments rotatifs dentaires, particulièrement mais non limitativement, pour instruments de traitement canalaire.

Les instruments utilisés dans la chirurgie dentaire nécessitent une hygiène parfaite, ce qui oblige les chirurgiens-dentistes à procéder régulièrement au nettoyage ou à la désinfection desdits instruments, ce qui engendre des dommages, en particulier les manches en aluminium peuvent être attaqués par les désinfectants et les manches en matière plastique gonflent sous l'effet du formol employé également comme désinfectant.

On a déjà proposé pour remédier à ces inconvénients un manche mixte à savoir qu'il n'est pas uniquement en matière plastique permettant audit manche d'être moins sensible à un nettoyage ou à une désinfection. Un tel manche a été décrit dans le brevet français FR-A-2 499 446.

Même s'il donne satisfaction, le manche tel que décrit présente quelques inconvénients. En effet, les moyens d'ancrage tels que prévus dans ledit brevet sont réalisés par un perçage d'un manchon métallique cylindrique ou un débordement en plastique par rapport audit manchon métallique cylindrique.

Ceci a pour inconvénient que lorsque l'utilisateur traite pour le nettoyage et/ou la désinfection les instruments à canaux avec des produits provoquant un gonflement du plastique, le plastique "sort" légèrement du manchon métallique cylindrique et fait saillie, ce qui peut rendre difficile la mise en place de l'instrument dans la pièce à main.

De plus, certains de ces modes de réalisation d'instruments dentaires requièrent une reprise du manchon métallique cylindrique pour sa fabrication, ce qui rend plus onéreuse ladite fabrication.

La présente invention a pour but de remédier aux inconvénients des dispositifs de l'art antérieur tels que présentés ci-dessus.

Conformément à l'invention, on propose à cette fin un manche pour instruments dentaires à canaux rotatifs constitué par un manchon métallique cylindrique dans lequel est introduite l'extrémité non active de l'instrument, l'espace compris entre le manchon et la tige étant rempli par une matière plastique qui constitue un noyau solidarisant le manchon et la tige qui dépasse à l'extrémité du manchon pour former la tête d'instrument, au moins un ancrage étant prévu entre le manchon et le noyau en matière plastique caractérisé en ce que l'ancrage est réalisé grâce à au moins un crantage longitudinal réalisé sur la paroi interne du manchon cylindrique sur au moins une partie de sa longueur, crantage dans lequel se loge la matière plastique, ledit crantage ne s'étendant pas jusqu'aux extrémités du manchon.

On comprendra mieux l'invention à l'aide de la description faite ci-après d'un mode préférentiel de mise en oeuvre, donné à titre d'exemple non limitatif, en référence aux dessins annexés dans lesquels :
- la **figure 1** est une vue en élévation et en coupe partielle du manche,
- les **figures 2 à 4** sont des vues de profil des manchons correspondant à trois variantes d'exécution,
- la **figure 5** représente une vue en coupe partielle du dessin du manche,
- la **figure 6** représente une vue en coupe partielle d'une variante d'exécution illustrant un crantage en forme de V.

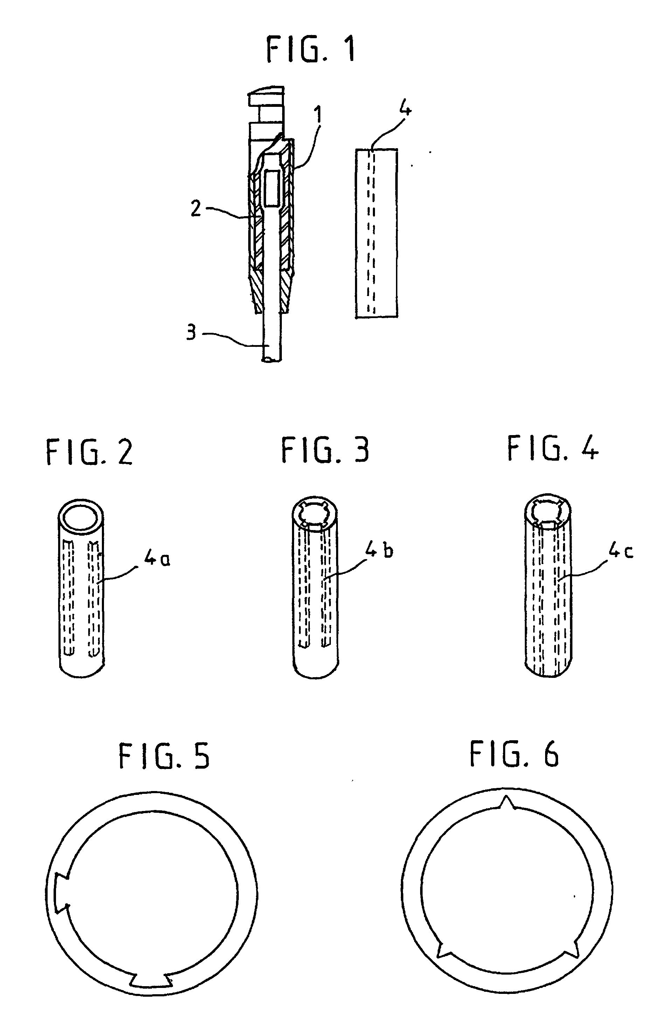

On se réfère tout d'abord à la figure 1.

Le manche pour instrument dentaire rotatif se compose essentiellement d'un manchon cylindrique creux (1) en métal, par exemple en maillechort, en laiton nickelé ou en acier inoxydable et à l'intérieur de ce manchon se trouve moulé un noyau en matière plastique (2).

La tige de l'outil (3) qui aura été insérée préalablement au moulage dans le manchon (1) de telle manière que son axe soit sensiblement dans l'axe du manchon, se trouve noyée dans le noyau de matière plastique (2) et donc reliée rigidement à lui et au manchon.

En référence aux figures 2, 3 et 4, on a représenté différentes formes d'exécution du manchon.

Sur la figure 2, le ou les crantages sont exécutés à l'intérieur de la paroi du manchon de telle manière à ne pas dépasser des extrémités du manchon (4a) constituant un ancrage.

Dans une variante d'exécution non conforme à l'invention, la figure 3 représente le ou les crantages exécutés à l'intérieur de la paroi du manchon de telle manière à déboucher à l'une des extrémités du manchon (4b).

Dans une autre variante d'exécution non conforme à l'invention, la figure 4 représente le ou les crantages exécutés à l'intérieur de la paroi du manchon de façon à déboucher aux deux extrémités du manchon (4c).

Avantageusement, le ou les crantages pourront avoir une forme en queue d'aronde (voir figure 5) ou une forme en V (voir figure 6).

C'est dans ce ou ces dits crantages que viendront se loger la matière plastique conférant au manche une moindre fragilité et une meilleure résistance aux désinfectants nécessaires aux nettoyages répétitifs des instruments dentaires.

Les différents éléments du manche tels que décrits seront réalisés par des procédés de fabrication qu'il n'est pas nécessaire de décrire ici.

## Revendications

1. Manche pour instrument dentaire à canaux rotatifs constitué par un manchon (1) métallique cylindrique dans lequel est introduite l'extrémité non active de l'instrument, l'espace compris entre le manchon (1) et la tige (3) étant rempli par une matière plastique (2) qui constitue un noyau solidarisant le manchon et la tige et qui dépasse à l'extrémité du manchon pour former la tête d'instrument, au moins un ancrage étant prévu entre le manchon cylindrique et le noyau en matière plastique **caractérisé en ce que** l'ancrage est réalisé grâce à au moins un crantage longitudinal (4) réalisé sur la paroi interne du manchon cylindrique sur au moins une partie de sa longueur, crantage dans lequel se loge la matière plastique, ledit crantage ne s'étendant pas jusqu'aux extrémités du manchon.

2. Manche pour instrument dentaire à canaux rotatifs selon la revendication 1, **caractérisé en ce que** le ou les crantages ont une forme en queue d'aronde.

3. Manche pour instrument dentaire à canaux rotatifs selon la revendication 1, **caractérisé en ce que** le ou les crantages ont une forme en V.

## Patentansprüche

1. Halter für ein dentales, rotierendes Werkzeug für Wurzelkanäle, welcher aus einer zylindrischen Hülse (1) aus Metall gebildet ist, in welcher das nicht aktive Ende des Werkzeugs eingesetzt ist, wobei der eingeschlossene Platz zwischen der Hülse (1) und dem Schaft (3) von einem Kunststoffmaterial (2) ausgefüllt ist, welches einen die Hülse und den Schaft stabilisierenden Kern bildet und welches das Ende der Hülse überragt, um den Kopf des Werkzeugs zu bilden und wobei zumindest eine Verankerung zwischen der zylindrischen Hülse und dem Kern aus Kunststoffmaterial vorgesehen ist, **dadurch gekennzeichnet, dass** die Verankerung dank zumindest einer länglichen Rastausnehmung (4) in der Innenmantelfläche der zylindrischen Hülse über zumindest einem Bereich ihrer Länge verwirklicht ist, wobei die Rastausnehmung das Kunststoffmaterial aufnimmt und sich nicht bis zu den Enden der Hülse erstreckt.

2. Halter für ein dentales, rotierendes Werkzeug für Wurzelkanäle nach Anspruch 1, **dadurch gekennzeichnet, dass** die Verankerung oder Verankerungen schwalbenschwanzförmig ist bzw. sind.

3. Halter für ein dentales, rotierendes Werkzeug für Wurzelkanäle nach Anspruch 1, **dadurch gekennzeichnet, dass** die Verankerung oder Verankerungen v-förmig ist bzw. sind.

## Claims

1. Handle for a rotary grooved dental instrument, said handle being formed by a cylindrical metallic sleeve (1), into which is introduced the non-active end of the instrument, the space between the sleeve (1) and the shaft (3) being filled by a plastics material (2), which forms a core joining together the sleeve and the shaft, and which protrudes beyond the end of the sleeve to form the head of the instrument, at least one anchorage being provided between the cylindrical sleeve and the core formed from plastics material, **characterised in that** the anchorage is produced by means of at least one longitudinal notched portion (4) provided on the internal wall of the cylindrical sleeve over at least some part of its length, in which notched portion is housed the plastics material, said notched portion not extending as far as the ends of the sleeve.

2. Handle for a rotary grooved dental instrument according to claim 1, **characterised in that** the notched portion or portions has or have a dovetail-shaped configuration.

3. Handle for a rotary grooved dental instrument according to claim 1, **characterised in that** the notched portion or portions has or have a V-shaped configuration.
